# EUROPEAN PATENT APPLICATION

(11) **EP 1 243 373 A2**
(43) Date of publication of application: **25.09.2002**
(21) Application number: 02090112.0
(22) Date of filing: 18.03.2002
(51) Int. Cl.: B23K 26/18, B23K 26/40, B41M 5/26, C03C 23/00

(54) **Laser marking on a coated substrate**

(30) Priority: 21.03.2001 US 813749
(71) Applicant: Pilkington North America, Inc., Toledo, Ohio 43697 (US)
(72) Inventor: Sahi, Hussein M., Maumee, Ohio 43537 (US)
(74) Representative: Pfenning, Meinig & Partner GbR

(57) **Abstract**

A method of utilizing laser energy to mark on a coated substrate is disclosed, wherein the coating is dried at a temperature below that necessary to permanently affix the coating to the substrate prior to the coated substrate being exposed to said laser energy. The dried coating is selectively removed by the laser energy in precise patterns that can be quickly and widely varied. The method of the present invention can be incorporated as a component of time-critical manufacturing processes.

## Description

### Background of the Invention

The present invention relates to a process for utilizing laser energy to mark, in a predetermined pattern, on a coating applied on a non-conductive substrate.

The use of laser energy to mark various types of information on a wide variety of materials is well known. In particular, the use of laser energy to mark complex symbols, patterns, etc., with a high degree of visual definition utilizing sophisticated computer software to direct and control the laser energy is currently in use. While it is possible to use the laser to mark directly on a substrate material such as glass, metal, ceramic materials and the like, it is sometimes desirable to apply a coating onto a material and use the laser energy to mark on the coating such that the area contacted by the laser energy will have a visual appearance different from that part of the coated substrate which has not been contacted by the laser energy.

One such application where it is desirable to mark on a coated substrate with laser energy is coated glass products, especially automotive glass products. In particular, it may be desirable to use laser energy to mark serially and temporally changing information on an automotive glass product, in the form of an alphanumeric code or a bar code, such as part number, date, time, manufacturing location, and other unique identifiers to a particular automotive glass product, such as an automotive window.

Conventionally, in the field of laser marking, three techniques have been utilized:
1) removal of conventionally printed and fired ceramic enamel coating on the glass by laser energy during the marking process;
2) use of special ceramic enamels which are applied to the glass, and are fired when contacted by laser energy during the marking process, with subsequent removal of the enamel areas which have not been so fired; and
3) use of lasers, particularly CO₂ lasers, to mark on uncoated glass substrates by removing portions of the substrate in a desired pattern.

The first technique has the disadvantage that because the ceramic enamel is heated to a temperature such that it becomes permanently affixed to the glass, it is likewise more difficult to remove using the laser energy. Thus, a longer cycle time at lower laser energy levels is necessary to remove the fired enamel. Longer cycle times translate into higher manufacturing costs. Alternatively, if higher levels of laser energy are utilized in order to more quickly remove the fired ceramic enamel, there is a greater risk that the surface of the substrate material will suffer damage in the form of crazing, micro-chipping, and the like. Regardless of the level of laser energy used, this technique may not provide sharply defined or "clean" images owing to the difficulty of uniformly removing the fired ceramic enamel.

The second technique has the disadvantage that specially formulated ceramic enamels are required, which tend to be more costly, and are less readily available than conventionally used ceramic enamels. Generally, formation of images by this technique cause crazing of the substrate surface, and may diminish the strength of the glass substrate. Additional post-firing steps, such as washing, may be necessary with this technique, thus raising manufacturing costs.

The third conventional technique has the disadvantage that a proportion of the laser energy is absorbed by the glass substrate, forming significant thermal stress in the glass. Such thermal stress may result in fracturing of the glass both internally and externally to the substrate. Further, the images formed have a rough or irregular appearance due to the irregular removal or "chipping away" of the substrate by the laser energy.

While it may be possible to perform the above-described conventional techniques of laser marking "on-line," as part of a non-time-critical or low volume manufacturing process, it would be difficult to effectively utilize them in connection with time-critical or high volume manufacturing processes, for the reasons set forth above.

In summary, therefore, the known techniques of laser marking are not well suited to manufacturing processes in which marking must occur in a very short cycle time.

Therefore, it would be desirable to have a technique of laser marking on a coated substrate that could be done "on-line," required a short cycle time, resulted in precise, readily alterable patterns without damage to the substrate surface, utilized conventional ceramic enamels, and due to the incremental benefits of all these factors, was cost-effective when compared to the known laser marking techniques.

### SUMMARY OF THE INVENTION

The method of the present invention uses laser energy to mark on dried, but not fired, ceramic enamels. The substrate carrying the dried and marked coating may then be fired to permanently affix the ceramic enamel to the substrate. It has been determined that the method of the invention substantially shortens the time (cycle time), compared to the known laser marking techniques, necessary for the laser to remove the ceramic enamel in the desired pattern, produces marks having excellent definition, does not cause appreciable damage to the substrate surface, can be used with a wide variety of commonly used ceramic enamels, and because of the reduced cycle time, can be done "on-line," as another routine step in time-critical manufacturing processes.

The method is particularly well-suited to the high-volume manufacture of automotive glass products. In glass substrates, the method of the subject invention has also been found to maintain the strength of the glass, i.e., not cause substantial weakening of the physical structure of the glass, as do several of the conventional laser marking techniques.

### DETAILED DESCRIPTION OF THE PREFERRED EMBODIMENT

The present invention is a method for marking on a coated, non-conductive substrate material utilizing laser energy.

The non-conductive substrate may be a glass ceramic material, which is a devitried or crystallized form of glass. Preferably, the non-conductive substrate is a glass, defined as an amorphous, undercooled liquid of extremely high viscosity, which appears to be a solid, most preferably a soda-lime-silica glass suitable for a variety of uses, particularly the manufacture of high-volume automotive glass products, where cost efficiency is an important factor in the commercial viability of a given product.

The coating to be applied to the non-conductive substrate may be any suitable enamel, containing a finely ground glass or ceramic frit, and finely powdered lead (although some lead-free enamels are now available, and could be used), such as are manufactured by Cerdec (n/k/a DMC²), Ferro Corporation and others. The enamel may be applied to the non-conductive substrate by any conventional method, preferably by silk-screening. The desired thickness of the coating applied to the substrate is typically in the range of 1.6-2.2 mils, preferably, on the order of 1.8 mils.

Certain ceramic enamels thus applied may be dried "naturally," that is in the ambient atmosphere of the manufacturing facility, however, the varying temperature and humidity conditions encountered, along with the possibility of contamination of the coating by dust, or other airborne particulate matter, does not provide ideal conditions for creating high-quality coatings on the non-conductive substrate.

In order to make drying time more predictable and to minimize contamination, it is desirable to accelerate drying of the coated substrate through the use of enclosed heating furnaces or radiant heat dryers. Even though providing accelerated drying, forced air dryers are not preferred as they create a greater opportunity for spreading airborne contaminants on the undried ceramic enamel.

In order to integrate the process of the present invention into conventional high-volume manufacturing processes, it is desirable for the drying time to be from 10 to 80 seconds, preferably not more than 60 seconds. Similarly, the temperature necessary to dry the ceramic enamel should be closely controlled to minimize time spent in the drying process. It has been determined that temperatures above 200°F, but less than 1000°F, are desirable. The upper limit is also influenced by the fact that the temperature at which such enamels are "fired," i.e., become permanently affixed to non-conductive substrate due to verification of the glass or ceramic frit in the enamel, may be as low as 1100°F.

After drying of the ceramic enamel is complete, it creates a coating on the non-conductive substrate which may, relatively easily, be removed mechanically from the non-conductive substrate, e.g., by scratching with a metal object such as a nail. The coating is also susceptible to removal by other methods, such as contacting the dried ceramic enamel with laser energy. It has been found that contacting the dried coating with a Nd-YAG laser, such as is manufactured by GSI Lumonics, readily and quickly removes the dried coating, leaving no discernible residue. A Nd-YAG laser, connected to a computer programmed with suitable software, such as AMS 50 Lightwriter, also supplied by GSI Lumonics, enables the formation of intricate and very precise patterns such as bar codes, alpha-numeric codes, logos and the like. Particularly important for use in high-volume manufacturing processes is the ability of such a laser-computer system to produce readily alterable or variable patterns, such as serial number codes, date codes, etc. It has only been through substantial experimentation that the use of Nd-YAG type lasers has been found to be particularly useful for this purpose.

While not wishing to be restricted to this theory, it is believed that the energy of the Nd-YAG laser successfully removes the coating from the glass substrate surface without damage to the substrate due to the particular wavelength of the energy produced by the Nd-YAG laser, which affects the structure of the coating, but passes through the glass substrate with no discernible effect.

It has further been found that the method of the present invention may be advantageously utilized to mark on coatings on glass substrates which have been heat-strengthened or tempered. By heat strengthening is meant treatment of glass such that its surface compressive stress is greater than 3,500 pounds per square inch (psi), whereas, tempering may be defined as further heat-strengthening of such glass such that the surface compressive stress of such glass is greater than 6000 psi. Known methods of marking on coatings on heat strengthened or tempered glass substrates may pose problems such as weakening the physical structure of the glass. Marking using the present method of laser marking creates no such undesirable effects.

Once the dried coating on the substrate material has been marked with laser energy it may be desirable to subject said marked, coated substrate to heating at a relatively high temperature in order to permanently affix said coating to the substrate. Preferably, when subjected to such heating, the non-conductive substrate will be glass, and the coating will be a ceramic enamel as has been previously described. When heated to temperatures in the range of 600°F-1500°F, preferably, 1100°F-1350°F, most desirable, readily available ceramic enamels will be "fired" and thus, permanently affixed to the glass substrate.

As previously alluded to, one of the benefits of the present method is that the drying, marking, and optional firing may be done at a rate compatible with high-volume manufacturing processes, for example, production of automotive glass products.

Testing conducted to date has shown that time for the various process steps may be accomplished as follows:

| | Approximate elapsed time |
|---|---|
| a) Application of coating | 6 to 10 seconds |
| b) Drying of coating | 10 to 60 seconds |
| c) Marking (with Nd-YAG laser) | 2 to 60 seconds |
| d) Firing (optional) | 200 to 240 seconds |
| | |
| Total cycle time (w/o firing) | 18 to 130 seconds |
| Total cycle time (w/ firing) | 218 to 370 seconds |

Such cycle times allow the subject method to be performed "on-line" during automotive glass production, rather than as a separate process, or "off-line" which likely would require additional labor and potentially additional equipment for a stand-alone operation. It should be noted that preferred marking times are on the order of 2-10 seconds, which makes the process of the present invention more compatible with present-day on-line manufacturing processes. Marking of certain, highly complex patterns may require more than 10 seconds, up to 60 seconds. Some accommodation in the manufacturing process may have to be made to allow for marking times greater than 10 seconds.

By contrast, known methods of marking require substantially longer cycle times, on the order of twice the amount of time described above in connection with the present invention, thus making these methods impractical for most on-line time-critical manufacturing processes. In accordance with the provisions of the patent statutes, the present invention has been described in what is considered to represent its preferred embodiment.

## Claims

1. A method for marking on a coated substrate, comprising:
a) supplying a non-conductive substrate having a surface;
b) applying a coating to said surface of the non-conductive substrate;
c) drying said coating at a temperature of less than 1000°F;
d) directing a source of energy in the form of a laser beam in a predetermined pattern on to said dried coating.

2. The method of claim 1 wherein said non-conductive substrate comprises glass or glass ceramic material.

3. The method of claim 1 wherein said coating is comprised of a ceramic enamel.

4. The method of claim 1 wherein after step d) said ceramic enamel is heated to a temperature and for a time sufficient to permanently affix said ceramic enamel to the substrate.

5. The method of claim 1 wherein said pre-determined pattern forms words, images, numbers, or patterns, or combinations thereof.

6. The method of claim 1 wherein said laser beam is created by a Nd: YAG laser.

7. The method of claim 1 wherein said marking is created by removal of said coating by said laser beam, whereby said removal further creates a discernible visual contrast between the remaining coating and the surface of the substrate from which said coating has been removed.

8. The method of claim 1 wherein said non-conductive substrate is flat.

9. The method of claim 1 wherein said non-conductive substrate is curved.

10. The method of claim 1 wherein said coating has a thickness of about 1.6-2.2 mils.

11. A method for marking on a substrate, comprising:
a) supplying a non-conductive substrate;
b) applying a coating to said non-conductive substrate;
c) drying said coating;
d) directing a laser beam in a pre-determined pattern onto said dried coating;
e) heating said dried, marked coated substrate to a temperature and for a time sufficient to permanently affix said marked coating to said substrate.

12. The method of claim 11 wherein said laser beam is directed onto the surface of non-conductive substrate carrying said coating.

13. The method of claim 11, wherein the temperature to permanently affix said marked coating to said substrate is about 600°F-1500°F.

14. Providing a substrate having a coating applied to a surface thereof; drying said coating at a temperature of less than 1000°F; directing a source of energy in the form of a laser beam in a predetermined pattern on to said dried coating, thereby selectively removing that portion of said coating to which said source of laser energy has been directed.

15. The marked, coated substrate of claim 14 wherein said substrate is heated to a temperature sufficient to permanently affix said marked coating to said substrate.
